# EUROPÄISCHE PATENTSCHRIFT

(11) **EP 2 765 148 B1**
(45) Veröffentlichungstag und Bekanntmachung des Hinweises auf die Patenterteilung: **01.04.2020**
(21) Anmeldenummer: 14075008.4
(22) Anmeldetag: 09.02.2014
(51) Int. Cl.: C08G 59/24, C08G 59/32, C08G 59/42, C08G 59/50, C09D 163/00

(54) **BESCHICHTUNGEN AUF EPOXIDBASIS UND EIN VERFAHREN ZU IHRER HERSTELLUNG UND IHRE VERWENDUNGEN**
Coatings based on epoxy and a method for their preparation and their uses
Revêtements à base d'époxyde, leur procédé de fabrication et leur utilisation

(30) Priorität: 10.02.2013 DE 102013002135; 03.12.2013 DE 102013018088
(43) Veröffentlichungstag der Anmeldung: 13.08.2014
(73) Patentinhaber: El Kudsi, Karim, 90587 Obermichelbach (DE)
(72) Erfinder: El Kudsi, Karim, 90587 Obermichelbach (DE)
(74) Vertreter: Gulde & Partner

(56) Entgegenhaltungen:
- US-A1- 2007 240 614
- US-B1- 6 346 596

## Beschreibung

Diese Erfindung betrifft Beschichtungen auf Epoxydharzbasis und ein Verfahren zu ihrer Herstellung durch Verarbeitung eines Zwei-Komponenten-Systeme und ihre Verwendung zur Beschichtung von Materialien zur Verringerung des Gasdurchganges, insbesondere zur Beschichtung von Rohren und hier insbesondere zur Innenbeschichtung von Rohren.

Die Verwendung von Epoxydharzen als Beschichtungsmaterialien ist bekannt. Die dazu verwendeten Harze basieren in aller Regel auf Bisphenol-A-diglycidether mit unterschiedlicher Oligomerenverteilung und Amin-basierten Härtersystemen. In einigen Fällen werden auch andere Härter verwendet, z. B. Carbonsäureanhydride oder Dicarbonsäuren.

So werden nach der DE 40 34 483 A1 Rohrinnenbeschichtungen mit Epoxydharzsystemen durchgeführt, die aus Standardharzen auf Bisphenol A (z. B. DER 628) mit Zusätzen von Thiolen und Standardhärtern auf Basis Dipropylentriamin bestehen. Diese weisen mehrere Nachteile auf, z. B. ist ihre Sauerstoffdiffusion relativ hoch und sie enthalten mindestens zwei nach der REACH-Verordnung kritische Stoffe, nämlich das Bisphenol A und Dipropylentriamin.

Zur Verringerung der Sauerstoffdiffusion sind einige Lösungswege beschrieben worden. So wurden in der US 2010/ 0160 494 A1 (Mitsubishi Gas Chemical Co. Inc., 24.06.2010) Gemische aus Epoxydharzen und Härtern aus einem Amingemisch basierend auf Xylylendiamin, Polyacylverbindungen, Monocarbonsäuren und einer Carbonatverbindung mit verlängerter Topfzeit umgesetzt. Die Systeme enthalten weiterhin Silanverbindungen zur Verbesserung der Haftung an Wandungen. Die Verwendung der Säureverbindungen ist kritisch zu sehen, da diese in Rohrleitungen mit durchfließendem Wasser ausgelaugt werden oder den Abbau der Harze katalysiert werden kann.

Eine weitere technische Lösung wird in der WO 97/42027 beschrieben, die Drei-Schichten-Systeme, bei denen zwischen zwei Epoxydharzschichten eine Siloxanschicht aufgebaut wird, betrifft, wobei ein Siloxan oder ein Organosilan dem Epoxydharz zugesetzt werden kann. Weitere technische Lösungen betreffen den Einsatz von Vinylester-Epoxydharzen (z. B. DE 602004010738 T2 der Astrium SAS, 24. 12. 2008), Gemische aus Epoxydharzen und Silanolverbindungen (DE 4008343 A1 der Kansai Paint Co. Ltd., 20. 09. 1990), den Einsatz von bestimmten Füllstoffen (US 2011/0058948 A1 , 10. 03. 2011) oder die Modifizierung der Epoxydharze mit elastifizierenden Gummiteilchen für Gastanks (US 2009/0255939 A1 15. 10. 2009).

Gasdiffusionsbarrieren werden weiterhin durch anorganische Schichten auf oder in Polymeren hergestellt, z. B. durch Hexamethyldisiloxan auf PET im Lichtbogenplasma oder durch Aluminiumoxidfilme als Zwischenschichten (siehe z. B. C. A. Wilson et al., Chem. Mater. 17, 5625 (2005), M. D. Groner et al., Appl. Phys. Lett. 88, 051907 (2006), A. A. Dameron et al., J. Phys. Chem. C 112, 4573 (2008), R. Cooper et al., Thin Solid Films 516, 4036 (2008)). Die Gasdiffusionseigenschaften von Polymeren werden in I. Cozmuta et al., J. Phys. Chem. B 111, 3151-3166 (2007) bzw. M. Salame et al., Polym. Engng. Sci. 26 (22) (1986) untersucht und beschrieben.

Eine weitere technische Lösung zur Reduzierung der Gasdiffusion betrifft die Anwendung von Polyurethanen. Polyurethane oder Polyharnstoffe sowie Poly(urethan-harnstoffe) weisen in Abhängigkeit von ihrer Struktur sehr unterschiedliche Gasdiffusionseigenschaften auf. Solche Poly(urethan-harnstoffe) mit Gasbarriereeigenschaften werden z. B. in US 6,569,533 B1 beschrieben. Auf Grund der hohen Reaktionsgeschwindigkeit der Reaktionskomponenten in den Polyurethan-Systemen werden mittels dieser vorzugsweise Filme oder Spritz-Beschichtungen hergestellt.

US 2007/240614 A1 beschreibt eine Zusammensetzung, die als Korrosionsschutz dient und aromatische Diepoxyde, cycloaliphatische Aminhärter, Katalysatoren und weitere Additive enthält. US 6346596 B1 offenbart eine Zusammensetzung, die als Gasbarriereschicht Verwendung findet sowie aromatische Epoxide und aliphatische Aminhärter enthält.

Insgesamt keine technische Lösung ableitbar, die für das Problem der Rohrinnenbeschichtungen mit in Bezug auf die Umwelt und das in den Röhren beförderte Wasser oder wässrige Medium unbedenklichen Stoffen geeignet wäre.

Aufgabe der Erfindung ist es daher, Beschichtungen auf Epoxydharzbasis und ein Verfahren zu ihrer Herstellung mittels eines Zwei-Komponenten-System mit einstellbarer, relativ niedriger Viskosität und einstellbaren Verarbeitungszeiten auf Basis von Epoxydharzen mit verringerter Gasdiffusion zur Verfügung zu stellen.

Erfindungsgemäß wird die Aufgabe mittels der Merkmale der Ansprüche 1 und 12 gelöst. Vorteilhafte Weiterbildungen sind in den Unteransprüchen angegeben.

Eine Epoxydharzkomponente A, die beispielsweise enthält
(A1) 55 bis 95 Gewichtsteilen cycloaliphatischen oder aliphatischen Di- oder Triepoxyden,
(A2) 5 bis 40 Gewichtsteilen epoxydierten natürlichen Ölen,
(A3) 0,1 bis 5 Gewichtsteilen eines Silans oder Siloxans oder Silanols,
(A4) 0,001 bis 1 Gewichteilen eines Katalysators und
(A5) bis zu 30 Gewichtsteilen an weiteren Additiven,
wobei sich die Gewichtsteile immer zu 100 ergänzen sollen, mit einer Härterkomponente B, enthaltend (B1) entweder
einer oder mehreren cycloaliphatischen Dicarbonsäure oder deren Anhydrid
oder
einem cycloaliphatischen sekundären Di- und/oder Polyamin und
einem cycloaliphatischen sekundären Amin
wird in einem stöchiometrischen Verhältnis der Epoxydgruppe zur Härtergruppe (B1 oder B2) von
1 : 0,5 bis 1 : 1,75 zur Umsetzung gebracht.

Die Komponenten A und B des Systems sollen derart aufgebaut werden, dass die Viskosität der
(A) Epoxydharzkomponente 20 bis 1200 mPas bei 25°C und
(B) Härterkomponente 100 bis 1500 mPas bei 25°C
betragen. Die Komponenten werden so eingestellt, dass ein Viskositätsanstieg des Systems nach dem Vermischen zwischen 3 und 150 Minuten, vorzugsweise zwischen 10 und 90 Minuten, eintritt und dadurch die Topfzeit des Systems zwischen 5 und 200 Minuten liegt. Die Aushärtung des Systems bis zur Klebfreiheit wird durch die speziellen Katalysatoren so eingestellt, dass eine 0,2 mm starke Schicht nach einer bis 24 Stunden klebfrei ist.

Die Harzkomponente enthält im Durchschnitt je Molekül wenigstens 1,7 Epoxydgruppen, vorzugsweise 2 oder mehr Epoxydgruppen. Als geeignete Epoxyde der Harzkomponente kommen dazu in Frage hydrierte Bisphenol-A-diglycidether (z. B. EPONEX® 1510 oder EPALLOY™ 5000), Hexahydrophthalsäure-diglycidether (z. B. EPALLOY™ 5200), 4-Glycidyl-oxy-N,N-diglycidyl-anilin, 3,4-Epoxycyclohexylmethyl-3,4-epoxycyclohexane-carboxylat (Dow ERL 4221), 1,6-Bis-(2,3-epoxypropoxy)hexan, Polytetrahydrofurandiglycidether, Neopentyl-glykoldiglycidether, und/oder 1,6-Bis-(2,3-epoxypropoxy)butan, 1,6-Bis-(2,3-epoxy-propoxy)-hexan. Als trifunktionelle Epoxydharz-Komponenten kommen 2,4,6-Trihydroxypyriridin-triglycidether, Decahydro-trihydroxy-naphthalin-triglycidether, Mesitylsäure-triglycidylester, 1,3,5-Triglycidyl-isocyanurat, Gemische davon oder ähnliche Verbindungen in Frage.

Als epoxydierte natürliche Öle (A2) sind insbesondere epoxydiertes Leinöl (Epoxol® 9-5) oder epoxydiertes Sojaöl (Epoxol® 7-4) geeignet, aber auch epoxydiertes Ricinusöl, epoxydiertes Kokosöl oder andere epoxydierte natürliche Öle können verwendet werden, solange die Anzahl der Epoxydgruppen je Molekül des Glycerintriesters im Durchschnitt mehr als 1,3 beträgt.

Als Härter sind sowohl Dicarbonsäuren bzw. Carbonsäureanhydride (B1) als auch aminische Härter (B2) geeignet.

Als Carbonsäureanhydride (B1) können benannt werden: Methyl-hexahydrophthalsäure-anhydrid, Methylnadinsäureanhydrid, Hexahydro-endo-methylen-phthalsäureanhydrid, Hexahydrophthalsäureanhydrid, Decalin-2,3-dicarbonsäure-anhydrid.

Als Dicarbonsäuren (B1) können benannt werden: Phthalsäure, Hexahydrophthalsäure, Nadinsäure, Tetrachlorhexahydrophthalsäure etc.

Als aminische Härter (B2) sind z. B. die Diamine wie 1,4-Diaminocyclohexan, modifiziertes 1,4-Diaminocyclohexan (Brenntag C884 oder C074), Isophorondiamin (PC AMINE® IPDA), ein nicht näher definiertes cycloaliphatisches Diamin zur Härtung bei Raumtemperatur (Brenntag C 368 oder C280 A), ein Reaktionsprodukt des 2-Propennutrils mit 3-Amino-1,5,5-trimethylcyclohexanmethanamin (PC AMINE® DA272), 4,4'-Dicyclohexylmethan-diamin, N,N'-Dimethyl-4,4'-dicyclohexylmethan-diamin, 3,3'-Dimethyl-4,4'-diaminocyclohexylmethan, N,N'-Bis(sec-butyl)4,4'-diaminocyclohexylmethan, 3-(Cyclohexylamino)propylamin, N,N'-Dimethyl-1,4-diaminocyclohexan, N,N'-Diethyl-1,4-diaminocyclohexan, 1,4-Xylylendiamin und/oder N.N'-Dimethyl-1,4-xylylendiamin geeignet.

Als sekundäre Monoamine (B2) sind z. B. geeignet: Di-n-butylamin, N-Methylcyclohexylamin, N-Ethylcyclohexylamin (PC CAT NECHA), Dicyclohexylamin, N-Methyloctylamin, N-Ethyl-octylamin, N-Ethylpiperazin.

Als Additive (A3) können Silane, Siloxane oder Silanole verwendet werden. Silane werden insbesondere bei Beschichtungen von Kunststoffen, glasfaserverstärkten Kunststoffen oder Gläsern bzw. Glasgeräten verwendet. Als Silane können einfache Silane der Formel R₂SiH₂ oder R₃SiH oder R¹R²R³SiH oder R¹R²SiH₂ verwendet werden, wobei
R lineare oder verzweigte aliphatische Kohlenwasserstoffreste mit 2 bis 20 C-Atomen,
R¹ lineare oder verzweigte, ggf. substituierte aliphatische Kohlenwasserstoffreste mit 2 bis 20 C-Atomen, wobei die Substitution eine Ether-, Ester-, Amin- oder Amidgruppe sein kann,
R² lineare oder verzweigte, ggf. substituierte aliphatische Kohlenwasserstoffreste mit 2 bis 20 C-Atomen, wobei die Substitution eine Ether-, Ester-, Amin- oder Amidgruppe sein kann,
R³ lineare oder verzweigte, ggf. substituierte aliphatische Kohlenwasserstoffreste mit 2 bis 20 C-Atomen, wobei die Substitution eine Ether-, Ester-, Amin- oder Amidgruppe sein kann.

Beispiele für geeignete Silane sind z. B. Diethyl-butyl-silan, Dibutylsilan, Bis-(ethoxyethyl)-silan, n-Octyl-dimethylsilan, Isooctyl-diethyl-silan, Octyl-diethoxysilan, Methacryloxypropyltrimethoxysilan, Triethoxyoctylsilan, Trimethoxy(methyl)silan, .

Als Siloxane sind z. B. Dow Corning® 510 Fluid, Dow Corning® AP-8087 Fluid, Dow Corning® 88 Additive, Dow Corning® 1-3502 Polymer, Hexamethyldisiloxan, Octamethylcyclotetrasiloxan, Dimethyl-methylaminoethyl-aminoisobutl-siloxanPOSS oder oligomere oder Polysiloxane geeignet.

Weiterhin sind Silicone bestimmter Struktur geeignet, z. B. Poly(dimethylsilicon), Poly-(diethylsilicon) oder poly(methyl-propyl)silicon. Auch Silikone mit partieller Aromatensubstitution (Copolysilikone) mit einem Substitutionsgrad unter 0,5 sind geeignet.

Als Katalysatoren (A4) können sowohl Lewis-Säuren wie Bortrifluorid, Zink-Komplexsalze (z. B. K-Pure® CXC-1765), Metallchelate, Triarylsulfonium-hexafluoroantimonate oder zinnorganische Verbindungen als auch Amine wie Imidazolderivate, insbesondere N-Methylimidazol, oder Hydroxylamide z. B. aus Piperidin und γ-Butyrolacton sowie Phosphonamidester oder Phosphoniumverbindungen verwendet werden.

Als weitere Additive (A5) kommen vor allem mikroskalige nicht-reaktive oder reaktive Additive in Frage. Insbesondere geeignet sind mikroskalige Metall- oder Halbmetalloxide oder -oxidhydroxide, z. B. Siliciumdioxid, Titandioxid, Aluminiumoxid, Aluminium-Iridium-Mischoxid, Aluminiumoxidhydroxid (synthetisch oder als Boehmit), Aluminiumoxide spezieller Morphologie (z. B. nach WO 2011/116751). Weiterhin werden als Additive (A5) eingesetzt: Pigmente, Farbstoffe, vorzugsweise feste Flammschutzmittel, andere Polymere in Form von Dispersionen, Pulvern oder Compounds, Oligomere wie Oligoharnstoffe auf Basis von Diisocyanaten aus der Polyurethan-Solvolyse, Oligophenylensulfide, Oligophenylenoxide, Polythiole, z. B. Glycerin-tri(thioglykolsäureester) oder Pentaerythrittetra(thioglykolsäureester) oder einfache Füllstoffe wie Calcit, Kreide, Bariumsulfat, Kaolin, Diatomeenerde, Porzellanmehl, Zinkoxid, Zinksulfid.

Für die Herstellung der Zwei-Komponenten-Systeme für Beschichtungen sollen die cycloaliphatischen oder aliphatischen Di- oder Triepoxyde mit epoxydierten natürlichen Ölen kombiniert werden, um durch diese Kombination die
- Vernetzungsdichte und damit Härte und thermische Beständigkeit,
- Diffusionseigenschaften,
- Mischbarkeit bzw. Löslichkeit der Additiven,
- Reaktionsgeschwindigkeit, Topfzeit und das Aushärteverhalten und
- Viskosität des Gemisches
einzustellen.

Zur Herstellung der Beschichtungen werden zunächst die Komponenten A und B getrennt in geeigneter Weise gemischt. Die Mischung kann in Tumblern erfolgen, bevorzugt werden jedoch Mischer in Form von ggf. beheizbaren oder kühlbaren Reaktoren aus Edelstahl oder mit Emaille-Beschichtung und geeigneten Rührwerkzeugen, z. B. mit Propellerrührern, Ankerrührern mit oder ohne Schikanen, Scheibenrührern verschiedener Ausführungen oder Ekato®-Rührern.

Zur Herstellung der Beschichtungen werden die Komponenten A und B in einem vorgegebenen Verhältnis miteinander vermischt, so dass das Verhältnis der Epoxydgruppen zu den Gruppen des/der Härter (Carbonsäure-, Säureanhydrid-, Amino-gruppen) zwischen 1 : 0,5 und 1 : 1,75 liegt. Reaktive Gruppen möglicher Additive, z. B. der Silane, Siloxane oder Silicone sowie der mikroskaligen Additiven werden bei der Kalkulation des Mischungsverhältnisses nicht berücksichtigt.

Die Beschichtung wird durch Mischung der Komponenten im Handansatz (manuelles Rühren oder Vermischen aus speziellen Behältern einschließlich Beuteln) oder durch maschinelle Mischung mit Zwei-Komponenten-Mischmaschinen mit rotierenden und/oder stationären Mischköpfen mit einer Dicke von 10 µm bis 5 mm, vorzugsweise 0,05 bis 0,2 mm, hergestellt. Der Auftrag der Beschichtung kann direkt auf dem Material (Substrat) erfolgen oder die Schicht wird als Film vorgefertigt und der Film thermisch oder mittels einer Adhäsivschicht auf das zu beschichtende Substrat aufgebracht. Dabei beträgt die Topfzeit des Systems zwischen 5 und 120 Minuten, die Schichten sind klebfrei nach 30 Minuten bis 24 Stunden.

Die erfindungsgemäßen Beschichtungen weisen gegenüber herkömmlichen Beschichtungen auf Epoxydharzbasis (Bisphenol-A-Basis) eine um mindestens den Faktor 10 verbesserte Sperrwirkung gegenüber Gasen, insbesondere Sauerstoff auf. Die nach dem Stand der Technik mit den Standardharzen erreichbaren Sauerstoffdiffusionswerte liegen bei 40°C bei bestenfalls 0,5 mg/(m².d) oder bei 80°C bei 5 mg/(m².d). Mittels der erfindungsgemäßen Beschichtungen können diese Werte auf 0,05 mg/(m².d) bei 40°C bzw. 0,5 mg/(m².d) bei 80°C reduziert werden und erfüllen somit die Anforderungen der DIN 4726.

Durch die erfindungemäße Mischung der cycloaliphatischen Harzkomponente (A1) und der epoxydierten Öle (A2) wird erreicht, dass
- die Viskosität der Mischung unter 1000 mPas bei 25°C liegt,
- die freien Volumina im Polymernetzwerk deutlich kleiner werden, so dass die Gasdiffusion massiv behindert wird und
- durch die Vermeidung der zur Bildung van der Waals'scher Bindungen befähigter Aromaten die Wechselwirkung zum paramagnetischen Sauerstoff stark verringert wird.

Durch die erfindungemäße Verwendung der cycloaliphatischen oder aliphatischen Di- oder Polyepoxyde als Beschichtungsmaterial wird vorteilhafterweise weiterhin ausgeschlossen, dass toxische Bestandteile durch Abbau oder Hydrolyse in die umgebenden Medien abgegeben werden. Das ist insbesondere beim Bisphenol A kritisch, da dieses fetotoxisch, gentoxisch oder cancerogen ist. Insofern werden die Anforderungen an Harzsysteme zur Beschichtung von Gegenständen, die mit Lebensmitteln, insbesondere Trinkwasser, in Berührung kommen, eingehalten und die Ausbildung toxischer Produkte oder deren Akkumulation in den Lebensmitteln vermieden.

Die erfindungsgemäßen Zwei-Komponenten-Epoxydharz-Systeme werden zur Beschichtung von Gegenständen aus Metall, Holz, Konstruktionswerkstoffen, Kunststoffen sowie zur inneren und äußeren Beschichtung von Rohren eingesetzt.

### Ausführungsbeispiele

### Beispiel 1

Eine A-Komponente wird hergestellt, indem in der genannten Reihenfolge die einzelnen Stoffe unter Rühren mit einem Ankerrührer mit zwei Prallblechen in einem 150 I fassenden Edelstahlreaktor unter Beschleierung mit Stickstoff bei einer Temperatur von 32°C vermischt werden:
- 30,5 Gewichtsteile Epoxol® 7-4,
- 0,5 Gewichteile Triphenylsulfonium-hexafluoroantimonat
- 1,5 Gewichtsteil Dow Corning® 510 Fluid,
- 67,5 Gewichtsteile EPALLOY™ 5200.

Dieses Gemisch wird vier Stunden intensiv mit 75 rpm gerührt. Die fertige, homogene A-Komponente weist eine Viskosität von 560 mPas (25°C) auf.

Eine B-Komponente wird in der gleichen Apparatur hergestellt aus
- 76 Gewichtsteilen Brenntag C 368 und
- 24 Gewichtsteilen N-Ethylcyclohexylamin (technisch)
durch intensives Vermischen bei 30°C innerhalb von drei Stunden.

Zur Herstellung der Beschichtung werden 75 Gewichtsteile der A-Komponente mit 25 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen, dass eine 0,2 mm Schicht entsteht. Die Schicht ist nach 12 Stunden klebfrei. Der von der Aluminiumplatte abgezogene Film weist eine Sauerstoffdurchlässigkeit von 0,021 mg/(m².d) bei 40°C auf.

### Beispiel 2

Wie in Beispiel 1 werden eine A- und eine B-Komponente hergestellt bestehend aus:
A-Komponente
   - 26,5 Gewichtsteile Epoxol® 9-5,
   - 0,5 Gewichteile Triphenylsulfonium-hexafluoroantimonat
   - 1,5 Gewichtsteil Dow Corning® 88 Additive,
   - 67,5 Gewichtsteile EPONEX® 1510,
B-Komponente
   - 77,5 Gewichtsteile N,N'-Dimethyl-4,4'-dicyclohexylmethan-diamin und
   - 22,5 Gewichtsteile N-Ethylcyclohexylamin (technisch)

Zur Herstellung der Beschichtung werden 66,5 Gewichtsteile der A-Komponente mit 34,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen, dass eine 0,2 mm Schicht entsteht. Die Schicht ist nach 10 Stunden klebfrei. Der von der Aluminiumplatte abgezogene Film weist eine Sauerstoffdurchlässigkeit von 0,016 mg/(m².d) bei 40°C auf.

### Beispiel 3

Wie in Beispiel 1 werden eine A- und eine B-Komponente hergestellt bestehend aus:
A-Komponente
   - 22,0 Gewichtsteile epoxydiertes Ricinusöl,
   - 0,75 Gewichteile Triphenylsulfonium-hexafluoroantimonat
   - 5,75 Gewichtsteil Hexamethyldisiloxan,
   - 12,8 Gewichtsteile 2,4,6-Trihydroxypyriridin-triglycidether,
   - 57,7 Gewichtsteile 6-Bis-(2,3-epoxypropoxy)hexan
   - 1,0 Gewichtsteile AluC® (Degussa)
B-Komponente
   - 65,0 Gewichtsteile N.N'-Dimethyl-1,4-xylylendiamin und
   - 35,0 Gewichtsteile N-Ethylcyclohexylamin (technisch)

Zur Herstellung der Beschichtung werden 62,5 Gewichtsteile der A-Komponente mit 37,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen und mit einer Rakel ausgezogen, dass eine 0,2 mm Schicht entsteht. Die Schicht ist nach 7 Stunden klebfrei. Der von der Aluminiumplatte abgezogene Film weist eine Sauerstoffdurchlässigkeit von 0,011 mg/(m².d) bei 40°C auf.

### Beispiel 4

Wie in Beispiel 1 werden eine A- und eine B-Komponente hergestellt bestehend aus:
A-Komponente
   - 33,5 Gewichtsteile Epoxol® 9-5,
   - 1,5 Gewichteile Triphenylsulfonium-hexafluoroantimonat
   - 2,5 Gewichtsteile Hexamethyldisiloxan,
   - 62,5 Gewichtsteile EPONEX® 1510,
B-Komponente
   - 62,5 Gewichtsteile Hexahydroendomethylenphthalsäureanhydrid und
   - 37,5 Gewichtsteile Methyl-hexahydrophthalsäure-anhydrid

Zur Herstellung der Beschichtung werden 60,0 Gewichtsteile der A-Komponente mit 35,0 Gewichtsteilen der B-Komponente manuell 120 s mit 300 rpm bei 60°C gerührt und danach 3 Minuten bei 0,1 mbar entgast. Dieses Gemisch wird auf eine polierte Aluminiumplatte gegossen mit einer Rakel zu einer 0,2 mm Schicht ausgezogen. Die Schicht ist nach 10 Stunden klebfrei. Der von der Aluminiumplatte abgezogene Film weist eine Sauerstoffdurchlässigkeit von 0,009 mg/(m².d) bei 40°C auf.

### Beispiel 5

Eine A-Komponente wird hergestellt, indem in der genannten Reihenfolge die einzelnen Stoffe unter Rühren mit einem Ankerrührer mit zwei Prallblechen in einem 150 I fassenden Edelstahlreaktor unter Beschleierung mit Stickstoff bei einer Temperatur von 32°C vermischt werden:
- 30,5 Gewichtsteile Epoxol® 7-4 (A2)
- 0,5 Gewichteile Triphenylsulfonium-hexafluoroantimonat (A4)
- 1,5 Gewichtsteil Dow Corning® 510 Fluid (A3), vorgemischt mit 0,05 % Aerosil R106, (A5),
- 67,5 Gewichtsteile EPALLOY™ 5200 (A1).

Dieses Gemisch wird vier Stunden intensiv mit 75 rpm gerührt. Die fertige, homogene A-Komponente weist eine Viskosität von 560 mPas (25°C) auf.

Eine B-Komponente wird in der gleichen Apparatur hergestellt aus
76 Gewichtsteilen Brenntag C 368 (B2) und
24 Gewichtsteilen N-Ethylcyclohexylamin (B2) (technisch)
durch intensives Vermischen bei 30°C innerhalb von drei Stunden.

Zur Herstellung der A-Komponente aus den Bestandteilen A1 bis A5 wird vor dieser Mischung eine Vormischung aus dem Siloxan / Silikon oder Silanol und einem Siliciumdioxid (Aerosil®) A5 zur besseren Verarbeitbarkeit hergestellt. Aerosil® R106 der Evonik AG ist ein hydrophobiertes Siliciumdioxid mit einer BET Oberfläche von 250 m²/g.

Zur Herstellung der Beschichtung werden 75 Gewichtsteile der A-Komponente mit 25 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen, dass eine 0,2 mm Schicht entsteht. Die Schicht ist nach 12 Stunden klebfrei. Der von der Aluminiumplatte abgezogene Film weist eine Sauerstoffdurchlässigkeit von 0,021 mg/(m².d) bei 40°C auf.

### Beispiel 6

Wie in Beispiel 1 werden eine A- und eine B-Komponente hergestellt bestehend aus:
A-Komponente
   - 26,5 Gewichtsteile Epoxol® 9-5 (A2)
   - 0,5 Gewichteile Triphenylsulfonium-hexafluoroantimonat (A4)
   - 1,5 Gewichtsteil Dow Corning® 88 Additive (A3), vorgemischt mit 0,075 % Aerosil R106 (A5),
   - 67,5 Gewichtsteile EPONEX® 151 (A1)
B-Komponente
   - 77,5 Gewichtsteile N,N'-Dimethyl-4,4'-dicyclohexylmethan-diamin (B2) und
   - 22,5 Gewichtsteile N-Ethylcyclohexylamin (B2) (technisch)

Zur Herstellung der Beschichtung werden 66,5 Gewichtsteile der A-Komponente mit 34,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen, dass eine 0,2 mm Schicht entsteht. Die Schicht ist nach 10 Stunden klebfrei. Der von der Aluminiumplatte abgezogene Film weist eine Sauerstoffdurchlässigkeit von 0,016 mg/(m².d) bei 40°C auf.

### Beispiel 7

Wie in Beispiel 1 werden eine A- und eine B-Komponente hergestellt bestehend aus:
A-Komponente
   - 22,0 Gewichtsteile epoxydiertes Ricinusöl (A2)
   - 0,75 Gewichteile Triphenylsulfonium-hexafluoroantimonat (A4)
   - 5,75 Gewichtsteil Hexamethyldisiloxan (A3), vorgemischt mit 0,05 % Aerosil R106 (A5), ?-12,8 Gewichtsteile 2,4,6-Trihydroxypyriridin-triglycidether (A1)
   - 57,7 Gewichtsteile 6-Bis-(2,3-epoxypropoxy)hexan (A1)
   - 1,0 Gewichtsteile AluC® (Degussa) Aluminiumoxid mit BET Oberfläche 100 m²/g (A5)
B-Komponente
   - 65,0 Gewichtsteile N.N'-Dimethyl-1,4-xylylendiamin (B2) und
   - 35,0 Gewichtsteile N-Ethylcyclohexylamin (B2) (technisch)

Zur Herstellung der Beschichtung werden 62,5 Gewichtsteile der A-Komponente mit 37,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen und mit einer Rakel ausgezogen, dass eine 0,2 mm Schicht entsteht. Die Schicht ist nach 7 Stunden klebfrei. Der von der Aluminiumplatte abgezogene Film weist eine Sauerstoffdurchlässigkeit von 0,011 mg/(m².d) bei 40°C auf.

### Beispiel 8

Wie in Beispiel 1 werden eine A- und eine B-Komponente hergestellt bestehend aus:
A-Komponente
   - 33,5 Gewichtsteile Epoxol® 9-5 (A2)
   - 1,5 Gewichteile Triphenylsulfonium-hexafluoroantimonat (A4)
   - 2,5 Gewichtsteile Hexamethyldisiloxan (A3), vorgemischt mit 0,5 % Aerosil R106 (A5),
   - 62,5 Gewichtsteile EPONEX® 1510 (A1)
B-Komponente
   (1) 62,5 Gewichtsteile Hexahydroendomethylenphthalsäureanhydrid (B1) und
   (2) 37,5 Gewichtsteile Methyl-hexahydrophthalsäure-anhydrid (B1)

Zur Herstellung der Beschichtung werden 60,0 Gewichtsteile der A-Komponente mit 35,0 Gewichtsteilen der B-Komponente manuell 120 s mit 300 rpm bei 60°C gerührt und danach 3 Minuten bei 0,1 mbar entgast. Dieses Gemisch wird auf eine polierte Aluminiumplatte gegossen mit einer Rakel zu einer 0,2 mm Schicht ausgezogen. Die Schicht ist nach 10 Stunden klebfrei. Der von der Aluminiumplatte abgezogene Film weist eine Sauerstoffdurchlässigkeit von 0,009 mg/(m².d) bei 40°C auf.

### Beispiel 9

Wie in Beispiel 1 werden eine A- und eine B-Komponente hergestellt bestehend aus:
A-Komponente
   - 22,0 Gewichtsteile epoxydiertes Ricinusöl (A2)
   - 0,75 Gewichteile Triphenylsulfonium-hexafluoroantimonat (A4)
   - 1,5 Gewichtsteile Triethanolamin (A4)
   - 5,75 Gewichtsteil Hexamethyldisiloxan (A3), vorgemischt mit 0,5 % Aerosil R106 (A5),
   - 12,8 Gewichtsteile 2,4,6-Trihydroxypyriridin-triglycidether (A1)
   - 56,2 Gewichtsteile 6-Bis-(2,3-epoxypropoxy)hexan (A1)
   - 1,3 Gewichtsteile Aerosil® COK (EVONIK AG, Silicium-Aluminium-Mischoxid mit BET Oberfläche 180 m²/g) (A5)
B-Komponente
   - 65,0 Gewichtsteile N.N'-Dimethyl-1,4-xylylendiamin (B1) und
   - 35,0 Gewichtsteile N-Ethylcyclohexylamin (technisch) (B1)

Zur Herstellung der Beschichtung werden 62,5 Gewichtsteile der A-Komponente mit 37,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen und mit einer Rakel ausgezogen, dass eine 0,2 mm Schicht entsteht. Die Schicht ist nach 4 Stunden klebfrei. Der von der Aluminiumplatte abgezogene Film weist eine Sauerstoffdurchlässigkeit von 0,015 mg/(m².d) bei 40°C auf.

### Beispiel 10

Wie in Beispiel 1 werden eine A- und eine B-Komponente hergestellt bestehend aus:
A-Komponente
   - 22,0 Gewichtsteile epoxydiertes Ricinusöl (A2)
   - 0,75 Gewichteile Triphenylsulfonium-hexafluoroantimonat (A4)
   - 2,0 Gewichtsteile Triethanolamin (A4)
   - 5,75 Gewichtsteil Hexamethyldisiloxan (A3), vorgemischt mit 0,5 % Aerosil R106 (A5),
   - 12,8 Gewichtsteile 2,4,6-Trihydroxypyriridin-triglycidether (A1)
   - 55,2 Gewichtsteile 6-Bis-(2,3-epoxypropoxy)hexan (A1)
   - 1,5 Gewichtsteile Aeroxide® Alu C 805 (Evonik AG, Aluminiumoxid mit BET Oberfläche 100 m²/g) (A5)
B-Komponente
   - 65,0 Gewichtsteile N.N'-Dimethyl-1,4-xylylendiamin (B2) und
   - 35,0 Gewichtsteile N-Ethylcyclohexylamin (B2), technisch

Zur Herstellung der Beschichtung werden 62,5 Gewichtsteile der A-Komponente mit 37,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen und mit einer Rakel ausgezogen, dass eine 0,2 mm Schicht entsteht. Die Schicht ist nach 5 Stunden klebfrei. Der von der Aluminiumplatte abgezogene Film weist eine Sauerstoffdurchlässigkeit von 0,010 mg/(m².d) bei 40°C auf.

### Beispiel 11

Wie in Beispiel 1 werden eine A- und eine B-Komponente hergestellt bestehend aus:
A-Komponente
   - 20,0 Gewichtsteile epoxydiertes Ricinusöl (A2)
   - 0,75 Gewichteile Triphenylsulfonium-hexafluoroantimonat (A4)
   - 5,75 Gewichtsteil Hexamethyldisiloxan (A3), vorgemischt mit 0,5 % Aerosil R106 (A5),
   - 12,0 Gewichtsteile 2,4,6-Trihydroxypyriridin-triglycidether (A1)
   - 60,0 Gewichtsteile 6-Bis-(2,3-epoxypropoxy)hexan (A1)
   - 1,5 Gewichtsteile Aeroxide® Alu C 805 (A5) (Evonik AG, Aluminiumoxid mit BET Oberfläche 100 m²/g)
B-Komponente
   - 60,0 Gewichtsteile N.N'-Dimethyl-1,4-xylylendiamin und (B2)
   - 40,0 Gewichtsteile N-Ethylcyclohexylamin (technisch) (B2)

Zur Herstellung der Beschichtung werden 62,5 Gewichtsteile der A-Komponente mit 37,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen und mit einer Rakel ausgezogen, dass eine 0,2 mm Schicht entsteht. Die Schicht ist nach 4 Stunden klebfrei. Der von der Aluminiumplatte abgezogene Film weist eine Sauerstoffdurchlässigkeit von 0,009 mg/(m².d) bei 40°C auf.

### Beispiel 12

Wie in Beispiel 1 werden eine A- und eine B-Komponente hergestellt bestehend aus:
A-Komponente
   - 25,0 Gewichtsteile epoxydiertes Ricinusöl (A2)
   - 1,0 Gewichteile Triphenylsulfonium-hexafluoroantimonat (A4)
   - 6,0 Gewichtsteil Hexamethyldisiloxan (A3), vorgemischt mit 0,5 % Aerosil R106 (A5),
   - 10,5 Gewichtsteile 2,4,6-Trihydroxypyriridin-triglycidether (A1)
   - 55,0 Gewichtsteile Bis-2,2-(2,3-epoxypropoxy-cyclohexyl)propan (A1)
   - 2,5 Gewichtsteile Aeroxide® Alu C 380F (A5), Evonik AG, Siliciumdioxid mit BET Oberfläche 380 m²/g
B-Komponente
   - 60,0 Gewichtsteile N.N'-Dimethyl-1,4-xylylendiamin (B2) und
   - 40,0 Gewichtsteile N-Ethylcyclohexylamin (B2) (technisch)

Zur Herstellung der Beschichtung werden 62,5 Gewichtsteile der A-Komponente mit 37,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen und mit einer Rakel ausgezogen, dass eine 0,2 mm Schicht entsteht. Die Schicht ist nach 4 Stunden klebfrei. Der von der Aluminiumplatte abgezogene Film weist eine Sauerstoffdurchlässigkeit von 0,010 mg/(m².d) bei 40°C auf.

### Beispiel 13

Wie in Beispiel 1 werden eine A- und eine B-Komponente hergestellt bestehend aus:
A-Komponente
   - 12,0 Gewichtsteile epoxydiertes Ricinusöl, A2
   - 1,5 Gewichteile Triphenylsulfonium-hexafluoroantimonat, A4
   - 6,5 Gewichtsteil Hexamethyldisiloxan A3 (vorgemischt mit 0,5 % Aerosil R106 A5),
   - 12,5 Gewichtsteile 2,4,6-Trihydroxypyriridin-triglycidether, A1
   - 5,0 Gewichtsteile Hexahydrophthalsäure-diglycidether, A1
   - 58,0 Gewichtsteile Bis-2,2-(2,3-epoxypropoxy-cyclohexyl)propan, A1
   - 2,5 Gewichtsteile Aeroxide® Alu C 850 (EVONIK AG, Aluminiumoxid mit BET Oberfläche 150 m²/g), (A5)
   - 2,0 Gewichtsteile Aeroxide® TiO₂ P90 (Evonik AG, Titandioxid mit BET Oberfläche 90 m²/g, (A5)
B-Komponente
   - 63,0 Gewichtsteile N.N'-Dimethyl-1,4-xylylendiamin (B2) und
   - 37,0 Gewichtsteile N-Ethylcyclohexylamin (B2) (technisch)

Zur Herstellung der Beschichtung werden 62,5 Gewichtsteile der A-Komponente mit 37,5 Gewichtsteilen der B-Komponente manuell 90 s mit 500 rpm gerührt und danach 2 Minuten bei 0,1 mbar entgast. Dieses Gemisch wird auf eine polierte Aluminiumplatte derart gegossen und mit einer Rakel ausgezogen, dass eine 0,2 mm Schicht entsteht. Die Schicht ist nach 5 Stunden klebfrei. Der von der Aluminiumplatte abgezogene Film weist eine Sauerstoffdurchlässigkeit von 0,0086 mg/(m².d) bei 40°C auf.

### Beispiel 14

Wie in Beispiel 4 werden eine A- und eine B-Komponente hergestellt bestehend aus:
A-Komponente
   - 30,5 Gewichtsteile Epoxol® 9-5 (A2)
   - 1,85 Gewichteile Triphenylsulfonium-hexafluoroantimonat (A4)
   - 2,5 Gewichtsteile Hexamethyldisiloxan A3, vorgemischt mit 0,1 % Aerosil R106 (A5),
   - 62,0 Gewichtsteile EPONEX® 1510 (A1)
   - 3,15 Gewichtsteile Pural® SB, Sasol Germany GmbH, Aluminiumoxidhydroxid, D = 12 nm (A5)
B-Komponente
   - 62,5 Gewichtsteile Hexahydroendomethylenphthalsäureanhydrid (B1) und
   - 37,5 Gewichtsteile Methyl-hexahydrophthalsäure-anhydrid (B1)

Zur Herstellung der Beschichtung werden 60,0 Gewichtsteile der A-Komponente mit 35,0 Gewichtsteilen der B-Komponente manuell 150 s mit 360 rpm bei 60°C gerührt und danach 3 Minuten bei 0,1 mbar entgast. Dieses Gemisch wird auf eine polierte Aluminiumplatte gegossen und mit einer Rakel zu einer 0,2 mm Schicht ausgezogen. Die Schicht ist nach 3 Stunden klebfrei. Der von der Aluminiumplatte abgezogene Film weist eine Sauerstoffdurchlässigkeit von 0,010 mg/(m².d) bei 40°C auf.

### Beispiel 15

Wie in Beispiel 4 werden eine A- und eine B-Komponente hergestellt bestehend aus:
A-Komponente
   - 30,5 Gewichtsteile Epoxol® 9-5 (A2)
   - 1,5 Gewichteile Triphenylsulfonium-hexafluoroantimonat (A4)
   - 2,5 Gewichtsteile Hexamethyldisiloxan (A3), vorgemischt mit 0,1 % Aerosil R106 (A5),
   - 62,0 Gewichtsteile EPONEX® 1510 (A1)
   - 3,5 Gewichtsteile Dispersal, Sasol Germany GmbH, Aluminiumoxidhydroxid, D = 80 nm (A5)
B-Komponente
   - 62,5 Gewichtsteile Hexahydroendomethylenphthalsäureanhydrid (B1) und
   - 37,5 Gewichtsteile Methyl-hexahydrophthalsäure-anhydrid (B1)

Zur Herstellung der Beschichtung werden 60,0 Gewichtsteile der A-Komponente mit 35,0 Gewichtsteilen der B-Komponente manuell 150 s mit 360 rpm bei 60°C gerührt und danach 3 Minuten bei 0,1 mbar entgast. Dieses Gemisch wird auf eine polierte Aluminiumplatte gegossen und mit einer Rakel zu einer 0,2 mm Schicht ausgezogen. Die Schicht ist nach 3 Stunden klebfrei. Der von der Aluminiumplatte abgezogene Film weist eine Sauerstoffdurchlässigkeit von 0,010 mg/(m².d) bei 40°C auf.

### Beispiel 16

Wie in Beispiel 4 werden eine A- und eine B-Komponente hergestellt bestehend aus:
A-Komponente
   - 30,5 Gewichtsteile Epoxol® 9-5 (A2)
   - 1,5 Gewichteile Triphenylsulfonium-hexafluoroantimonat (A4)
   - 2,5 Gewichtsteile Dow Corning® 510 Fluid (A3), vorgemischt mit 0,2 % Aerosil R106 (A5),
   - 62,0 Gewichtsteile EPONEX® 1510 (A1)
   - 3,5 Gewichtsteile Pural MG50 (A5), Sasol Germany GmbH, Aluminium-Magnesium-Hydroxycarbonat D = 45 µm),
B-Komponente
   - 50,0 Gewichtsteile Hexahydroendomethylenphthalsäureanhydrid (B1) und
   - 50,0 Gewichtsteile Methyl-hexahydrophthalsäure-anhydrid (B1)

Zur Herstellung der Beschichtung werden 60,0 Gewichtsteile der A-Komponente mit 35,0 Gewichtsteilen der B-Komponente manuell 150 s mit 360 rpm bei 60°C gerührt und danach 3 Minuten bei 0,1 mbar entgast. Dieses Gemisch wird auf eine polierte Aluminiumplatte gegossen und mit einer Rakel zu einer 0,2 mm Schicht ausgezogen. Die Schicht ist nach 3,5 Stunden klebfrei. Der von der Aluminiumplatte abgezogene Film weist eine Sauerstoffdurchlässigkeit von 0,013 mg/(m².d) bei 40°C auf.

### Beispiel 17

Wie in Beispiel 4 werden eine A- und eine B-Komponente hergestellt bestehend aus:
A-Komponente
   - 30,0 Gewichtsteile Epoxol® 9-5 (A2)
   - 1,25 Gewichteile Triphenylsulfonium-hexafluoroantimonat (A4)
   - 1,75 Gewichtsteile BF3-Etherat (25 %) (A4)
   - 2,5 Gewichtsteile Dow Corning® 510 Fluid (A3), vorgemischt mit 0,2 % Aerosil R106 (A5),
   - 61,0 Gewichtsteile EPONEX® 1510 (A1)
   - 3,5 Gewichtsteile Pural MG50 (A5), Sasol Germany GmbH, Aluminium-Magnesium-Hydroxycarbonat D = 45 µm
B-Komponente
   - 50,0 Gewichtsteile Hexahydroendomethylenphthalsäureanhydrid (B1) und
   - 50,0 Gewichtsteile Methyl-hexahydrophthalsäure-anhydrid (B1)

Zur Herstellung der Beschichtung werden 60,0 Gewichtsteile der A-Komponente mit 35,0 Gewichtsteilen der B-Komponente manuell 150 s mit 360 rpm bei 60°C gerührt und danach 3 Minuten bei 0,1 mbar entgast. Dieses Gemisch wird auf eine polierte Aluminiumplatte gegossen und mit einer Rakel zu einer 0,2 mm Schicht ausgezogen. Die Schicht ist nach 3,5 Stunden klebfrei. Der von der Aluminiumplatte abgezogene Film weist eine Sauerstoffdurchlässigkeit von 0,013 mg/(m².d) bei 40°C auf.

### Beispiel 18

Wie in Beispiel 4 werden eine A- und eine B-Komponente hergestellt bestehend aus:
A-Komponente
   - 30,5 Gewichtsteile Epoxol® 9-5 (A2)
   - 1,75 Gewichteile Triphenylsulfonium-hexafluoroantimonat (A4)
   - 3,5 Gewichtsteile Dow Corning® 510 Fluid (A3), vorgemischt mit 0,2 % Aerosil R106 (A5),
   - 60,75 Gewichtsteile EPONEX® 1510 (A1)
   - 3,5 Gewichtsteile Zinkoxid (D = 12 nm, Versuchsprodukt der Christian-Albrechts-Universität Kiel) (A5)
B-Komponente
   - 50,0 Gewichtsteile Hexahydroendomethylenphthalsäureanhydrid (B1) und
   - 50,0 Gewichtsteile Methyl-hexahydrophthalsäure-anhydrid (B1)

Zur Herstellung der Beschichtung werden 60,0 Gewichtsteile der A-Komponente mit 35,0 Gewichtsteilen der B-Komponente manuell 180 s mit 360 rpm bei 60°C gerührt und danach 3 Minuten bei 0,1 mbar entgast. Dieses Gemisch wird auf eine polierte Aluminiumplatte gegossen und mit einer Rakel zu einer 0,2 mm Schicht ausgezogen. Die Schicht ist nach 3,0 Stunden klebfrei. Der von der Aluminiumplatte abgezogene Film weist eine Sauerstoffdurchlässigkeit von 0,011 mg/(m².d) bei 40°C auf.

### Beispiel 19

Wie in Beispiel 4 werden eine A- und eine B-Komponente hergestellt bestehend aus:
A-Komponente
   - 30,0 Gewichtsteile Epoxol® 9-5 (A2)
   - 1,25 Gewichteile Triphenylsulfonium-hexafluoroantimonat (A4)
   - 3,0 Gewichtsteile Dow Corning® 510 Fluid (A3), vorgemischt mit 0,1 % Aerosil R106 (A5),
   - 62,5 Gewichtsteile EPONEX® 1510 (A1)
   - 3,25 Gewichtsteile Indium-Zink-Mischoxid (D = 13 nm, Versuchsprodukt der Christian-Albrechts-Universität Kiel) (A5)
B-Komponente
   - 50,0 Gewichtsteile Hexahydroendomethylenphthalsäureanhydrid (B1) und
   - 50,0 Gewichtsteile Methyl-hexahydrophthalsäure-anhydrid (B1)

Zur Herstellung der Beschichtung werden 60,0 Gewichtsteile der A-Komponente mit 35,0 Gewichtsteilen der B-Komponente manuell 150 s mit 360 rpm bei 60°C gerührt und danach 3 Minuten bei 0,1 mbar entgast. Dieses Gemisch wird auf eine polierte Aluminiumplatte gegossen und mit einer Rakel zu einer 0,2 mm Schicht ausgezogen. Die Schicht ist nach 3,5 Stunden klebfrei. Der von der Aluminiumplatte abgezogene Film weist eine Sauerstoffdurchlässigkeit von 0,013 mg/(m².d) bei 40°C auf.

## Patentansprüche

1. Beschichtungen auf Epoxydharzbasis, herstellbar durch Umsetzung eines Zwei-Komponenten-Systemes unter Formgebung,
enthaltend eine Komponente A, umfassend
(A1) cycloaliphatische oder aliphatische Di- oder Triepoxyde,
(A2) epoxydierte natürliche Öle,
(A3) Silane oder Siloxane oder Silanole
(A4) Katalysatoren und
(A5) weitere Additive,
und eine Härterkomponente B, umfassend
(B1) eine oder mehrere cycloaliphatische Dicarbonsäure oder deren Anhydride oder
(B2) cycloaliphatische sekundäre Di- und/oder Polyamine und
cycloaliphatische sekundäre Amine.

2. Beschichtungen nach Anspruch 1, **dadurch gekennzeichnet, dass** die Komponenten A und B in einem stöchiometrischen Verhältnis der Epoxydgruppe zur Härtergruppe von 1 : 0,5 bis 1 : 1,75 zur Umsetzung gebracht werden.

3. Beschichtungen nach einem der Ansprüche 1 bis 2, **dadurch gekennzeichnet, dass** ein cyclisches Siloxan (A3) eingesetzt wird.

4. Beschichtungen nach einem der Ansprüche 1 bis 3, **dadurch gekennzeichnet, dass** Hexamethyldisiloxan (A3) eingesetzt wird.

5. Beschichtungen nach einem der Ansprüche 1 bis 4, **dadurch gekennzeichnet, dass** N-Ethyl-cyclohexylamin (B1) eingesetzt wird.

6. Beschichtungen nach einem der Ansprüche 1 bis 5, **dadurch gekennzeichnet, dass** als Additive (A5) mikroskalige Metalloxide eingesetzt werden.

7. Beschichtungen nach einem der Ansprüche 1 bis 5, **dadurch gekennzeichnet, dass** als Additive (A5) mikroskalige Halbmetalloxide eingesetzt werden.

8. Beschichtungen nach einem der Ansprüche 1 bis 5, **dadurch gekennzeichnet, dass** als Additive (A5) mikroskalige Metalloxid-hydroxide eingesetzt werden.

9. Verfahren zur Herstellung von Beschichtungen auf Epoxydharzbasis gemäß Ansprüche 1 bis 8, durch Umsetzung eines Zwei-Komponenten-Systems, **dadurch gekennzeichnet, dass**
eine Komponente A, umfassend
(A1) cycloaliphatische oder aliphatische Di- oder Triepoxyde,
(A2) epoxydierte natürliche Öle,
(A3) Silane oder Siloxane oder Silanole,
(A4) Katalysatoren und
(A5) weitere Additive,
und eine Härterkomponente B, umfassend
(B1) eine oder mehrere cycloaliphatische Dicarbonsäuren oder deren Anhydride oder
(B2) cycloaliphatische sekundäre Di- und/oder Polyamine und
cycloaliphatische sekundäre Amine,
miteinander unter Formgebung zur Umsetzung gebracht werden.

10. Verwendung der Beschichtungen gemäß Anspruch 1 bis 8 zur Beschichtung von Gegenständen aus Metall, Holz, Konstruktionswerkstoffen, Kunststoffen.

11. Verwendung der Beschichtungen gemäß Anspruch 1 bis 8 zur inneren und äußeren Beschichtung von Rohren.

## Claims

1. Coatings based on epoxy resins which can be produced by reacting a two-component system along with shaping, containing a component A comprising:
(A1) cycloaliphatic or aliphatic diepoxides or triepoxides,
(A2) epoxidized natural oils,
(A3) silanes or siloxanes or silanols,
(A4) catalysts, and
(A5) other additives,
and a curing component B, comprising:
(B1) one or more cycloaliphatic dicarboxylic acids or anhydrides thereof, or
(B2) cycloaliphatic secondary diamines and/or polyamines, and
cycloaliphatic secondary amines.

2. The coatings as claimed in claim 1, **characterized in that** the components A and B are reacted in a stoichiometric ratio of the epoxy groups to the curing agent groups of 1:0.5 to 1:1.75.

3. The coatings as claimed in claim 1 or claim 2, **characterized in that** (A3) is a cyclic siloxane.

4. The coatings as claimed in one of claims 1 to 3, **characterized in that** (A3) is hexamethyldisiloxane.

5. The coatings as claimed in one of claims 1 to 4, **characterized in that** (B1) is N-ethylcyclohexylamine.

6. The coatings as claimed in one of claims 1 to 5, **characterized in that** microscale metal oxides are used as the additive (A5).

7. The coatings as claimed in one of claims 1 to 5, **characterized in that** microscale metalloid oxides are used as the additive (A5).

8. The coatings as claimed in one of claims 1 to 5, **characterized in that** microscale metal oxide hydroxides are used as the additive (A5).

9. A method for the production of coatings based on epoxy resins as claimed in claims 1 to 8, by reacting a two-component system, **characterized in that** a component A comprising:
(A1) cycloaliphatic or aliphatic diepoxides or triepoxides,
(A2) epoxidized natural oils,
(A3) silanes or siloxanes or silanols,
(A4) catalysts, and
(A5) other additives,
and a curing component B comprising:
(B1) one or more cycloaliphatic dicarboxylic acids or anhydrides thereof, or
(B2) cycloaliphatic secondary diamines and/or polyamines, and
cycloaliphatic secondary amines,
are reacted with each other, along with shaping.

10. Use of the coatings as claimed in claims 1 to 8, to coat articles formed from metal, wood, construction materials or plastics.

11. Use of the coatings as claimed in claims 1 to 8, for the internal and external coating of pipes.

## Revendications

1. Revêtements à base de résine époxyde, pouvant être fabriqués par réaction d'un système à deux composants en réalisant une mise en forme,
lequel contient un composant A, comprenant
(A1) des di- ou triépoxydes cycloaliphatiques ou aliphatiques,
(A2) des huiles naturelles époxydées,
(A3) des silanes ou siloxanes ou silanols
(A4) des catalyseurs, et
(A5) d'autres additifs,
et un composant durcissant B, comprenant (B1)
un ou plusieurs acides dicarboxyliques cycloaliphatiques ou leurs anhydrides, ou
(B2) des di- et/ou polyamines secondaires cycloaliphatiques et des amines secondaires cycloaliphatiques.

2. Revêtements selon la revendication 1, **caractérisés en ce que** l'on fait réagir les composants A et B dans un rapport stœchiométrique entre le groupe époxyde et le groupe durcissant compris entre 1 : 0,5 et 1 : 1,75.

3. Revêtements selon l'une des revendications 1 à 2, **caractérisés en ce que** l'on met en œuvre un siloxane cyclique (A3).

4. Revêtements selon l'une des revendications 1 à 3, **caractérisés en ce que** l'on met en œuvre de l'hexaméthyldisiloxane (A3).

5. Revêtements selon l'une des revendications 1 à 4, **caractérisés en ce que** l'on met en œuvre de la N-éthyl-cyclohexylamine (B1).

6. Revêtements selon l'une des revendications 1 à 5, **caractérisés en ce que** l'on met en œuvre, en tant qu'additif (A5), des oxydes de métaux à l'échelle micronique.

7. Revêtements selon l'une des revendications 1 à 5, **caractérisés en ce que** l'on met en œuvre, en tant qu'additif (A5), des oxydes de métalloïdes à l'échelle micronique.

8. Revêtements selon l'une des revendications 1 à 5, **caractérisés en ce que** l'on met en œuvre, en tant qu'additif (A5), des hydroxydes d'oxydes de métaux à l'échelle micronique.

9. Procédé de fabrication de revêtements à base de résines époxydes selon les revendications 1 à 8, par réaction d'un système à deux composants, **caractérisé en ce que**
l'on fait réagir, l'un avec l'autre en réalisant une mise en forme, un composant A qui comprend
(A1) des di- ou triépoxydes cycloaliphatiques ou aliphatiques,
(A2) des huiles naturelles époxydées,
(A3) des silanes ou siloxanes ou silanols,
(A4) des catalyseurs, et
(A5) d'autres additifs,
et un composant durcissant B qui comprend (B1)
un ou plusieurs acides dicarboxyliques cycloaliphatiques ou leurs anhydrides, ou
(B2) des di- et/ou polyamines secondaires cycloaliphatiques et des amines secondaires cycloaliphatiques.

10. Utilisation des revêtements selon les revendications 1 à 8 pour revêtir des objets en métal, en bois, en matériaux de construction, en matières plastiques.

11. Utilisation des revêtements selon les revendications 1 à 8 pour les revêtements intérieur et extérieur de tubes.
